(19) **Europäisches Patentamt**
**European Patent Office**
**Office européen des brevets**

(11) **EP 2 470 879 B1**

(12) **EUROPEAN PATENT SPECIFICATION**

(45) Date of publication and mention
of the grant of the patent:
**04.05.2016 Bulletin 2016/18**

(51) Int Cl.:
***G01N 11/04*** (2006.01)  ***G01N 9/30*** (2006.01)
***G01L 1/00*** (2006.01)

(21) Application number: **10814149.0**

(22) Date of filing: **12.08.2010**

(86) International application number:
**PCT/US2010/045265**

(87) International publication number:
**WO 2011/028387 (10.03.2011 Gazette 2011/10)**

(54) **DEVICE AND METHOD TO MEASURE BULK UNCONFINED YIELD STRENGTH OF POWDERS USING MINIMAL MATERIAL**

VORRICHTUNG UND VERFAHREN ZUR MESSUNG DER UNBESCHRÄNKTEN ERTRAGSSTÄRKE VON PULVERN UNTER VERWENDUNG MINIMALER MATERIALMENGEN

DISPOSITIF ET PROCÉDÉ DE MESURE DE LA LIMITE D'ÉLASTICITÉ CONVENTIONNELLE DE POUDRES LIBRES EN VRAC, AVEC UNE QUANTITÉ MINIMALE DE MATIÈRE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **27.08.2009 US 237648 P**

(43) Date of publication of application:
**04.07.2012 Bulletin 2012/27**

(73) Proprietor: **Johanson Holdings, LLC**
**Gainesville, FL 32609 (US)**

(72) Inventor: **JOHANSON, Kerry**
**Gainesville, FL 32609 (US)**

(74) Representative: **Gill Jennings & Every LLP**
**The Broadgate Tower**
**20 Primrose Street**
**London EC2A 2ES (GB)**

(56) References cited:
**US-A- 5 109 717**    **US-A- 5 117 699**
**US-A- 5 117 699**    **US-A- 5 847 294**
**US-A1- 2007 107 540**    **US-A1- 2007 107 540**

• **Stasiek, M. et al.: "Direct shear testing of flowability of food powders", , 1 January 2004 (2004-01-01), pages 6-10, XP055174948, Retrieved from the Internet: URL:http://www.agriculturejournals.cz/publicFiles/57331.pdf [retrieved on 2015-03-09]**

**Description**

BACKGROUND OF THE INVENTION

The present invention relates to devices and methods to measure bulk unconfined yield strength of powders using minimal material. The traditional method of measuring the bulk strength of a powder is to place material in some form of shearing device that allows a consolidation load to be placed on top of the material, such as revealed by US-A-5 117 699 where the material is then sheared to bring it to a steady shear load condition measured by load cells. The consolidation load is decreased, and the sample is sheared again to measure the peak shear stress. This procedure is typically repeated five to seven times at different shear loads, and all of this data is used to compute a single measurement of unconfined yield strength. The shear cells utilized to accomplish this task hold between 75 cc (cubic centimeters) and 400 cc material and may require multiple fillings. This prior art procedure is complex and requires a trained technician to perform these tests. These devices generally produce a value that is repeatable to only about 30 percent. Often sufficient material is not available for a detailed analysis using these standard methods. This is especially true in the formulation stage of the product or process design.

The inability to characterize the bulk cohesive strength of powders using prior methods can lead to significant production losses in pharmaceutical, food, cosmetic, pigment, chemical, and other industries that handle bulk powders. Companies often desire to characterize bulk strength prior to process design, but have insufficient quantities of material to accomplish this by standard means. Failure to characterize the bulk cohesive properties leads to process failure and costly redesigns, extending time-to-market and wasting company resources. In addition, product quality is strongly influenced by the degree of cohesion a bulk powder material possesses. The ability to obtain a measurement of cohesive flow properties early in the design process provides valuable information to guide product development.

Object of the invention is to arrive at new precise methods and devices to measure bulk strength of powder materials, those new methods and devices should require only minimal quantities of powder material and capable of being carried out by relatively low-skilled persons.

SUMMARY OF THE INVENTION

Said objects are met by the method of claim 1 as well as by the device of claim 4. The present invention includes testing devices to measure bulk unconfined yield strength of powders using minimal material. In inventive methods, a bulk strength characteristic of powder materials is determined by applying known acceleration forces on a test cell containing unconfined powder. The powder is first consolidated in a test cell cavity to replicate a prescribed condition such as might exist in a process stream of interest. Failure of the powder in testing is determined by its escape from the cavity under acceleration forces. Strength is determined by calculation based on the powder material properties, cavity geometry and acceleration forces at failure.

A conical test cell cavity is used to establish a useful consolidated (stressed) state in the powder. To establish consolidation, the cavity bottom is first covered during acceleration. Prior to testing to failure the cavity bottom is exposed to allow failure and escape of the powder upon subsequent application of acceleration forces.

In particular embodiments of the invention, the following steps are performed to accomplish the task of measuring bulk unconfined yield strength of material. First, a quantity of powder material is prepared by passing through a sieve to remove any lumps. A conical hole or cavity in a test cell is then filled with the powder and the cell closed to retain the powder within. The amount of powder in the cell is determined by weight. The powder in the cell is then consolidated by rotating the cell about an axis perpendicular to a cell longitudinal axis, thereby inducing a prescribed packed or stressed state. The ends of the test cells are then exposed and the cell rotated again to generate increasing acceleration forces to drive the powder from the cell. The event of the powder leaving the cell is detected by detecting light passing through the cell cavity - the light previously being blocked by the powder in the cell. The strength of the powder is then calculated from the cell geometry, powder characteristics, and rotation induced acceleration forces at the time of failure of the bulk powder.

Embodiments of the invention may successfully use as little as about 0.1 milliliters of material, a single filling of the cell, to measure the bulk unconfined yield strength of material. The procedure is simple and requires little operator training to perform. Because the invention is simple and uses little material, it is well suited to characterize bulk strength during product formulation stages and can provide guidance during early stages of product and process design, thereby minimizing the time-to-market.

Various other embodiments are contemplated and are disclosed or make clear from the following detailed description of the inventive embodiments and associated claims.

DESCRIPTION OF THE DRAWINGS

Figure 1 a and 1 b illustrate one configuration of a test cell according to the invention.
Figure 2 illustrates a device for rotating a test cell according to the invention for carrying out the test methods.
Figure 3 illustrates a light source and path for detecting failure of powder in a test cell in particular embodiments of the invention.

DESCRIPTION OF THE EMBODIMENTS

It is commonly known that cohesive arches form in conical hoppers of powders as a result of either the interlocking of powder particles or the net effect of all the adhesive forces between particles. The powder's strength in these circumstances is a measurement of the cohesive nature of the product and is directly proportional to the arching tendency of the material. Strength is also a function of the stress level applied to the bulk material. The inventive methods and device herein provide the ability to determine strengths of powders in the context of these prescribed stresses.

In one embodiment of the invention, centrifugal forces acting on a volume of powder material in a test cell generate stress in the material. The stress level caused by spinning a confined bulk material around an axis is directly proportional to the square of the rotational speed. Thus, if the weight of the material sample, the volume of the test sample, and the rotational speed are known, one can compute the stress on the sample during rotation - and also its strength at failure.

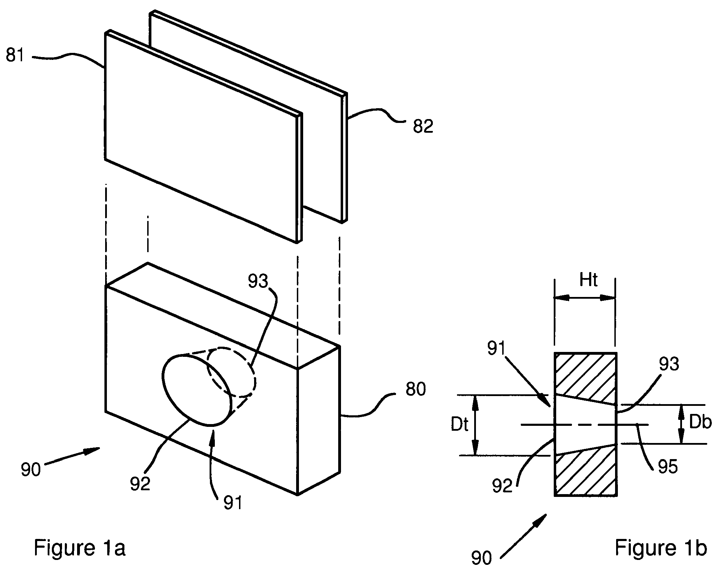

Figures 1 a and 1 b illustrate a test cell 90 including a cavity 91 according to the invention. Figure 1 b is a cross section view of the cell 90 shown in Figure 1 a (through the center of the cavity 91). Before filling the cell 90, it is important that powder material placed in the cell 90 be free from lumps. The material is preferably prepared by gently pushing the bulk material through a sieve with mesh size three to ten times that of the largest particle in the powder, and the sieved material collected. This has the effect of breaking the lumps and soft agglomerates that may be present in the bulk powder due to caking or other time storage effects.

The cell 90 consists of a conical hole or cavity 91 formed in a body of metal 80. The cavity 91 has a top outlet 92 having a diameter of dimension Dt. For many applications, a diameter dimension Dt of 6.35 millimeters (1/4 inch) will be useful. The cavity 91 includes a bottom outlet 93 with a smaller diameter dimension Db that is 1/3 to 1/2 of the top diameter dimension Dt. The cavity 91 has a height Ht of about 70 percent of the top outlet diameter Dt. The cavity 91 has a conical center axis 95.

Retaining plates 81, 82 hold material in the cell 90 after the cavity 91 is filled. Filling the cavity 90 may be accomplished by placing the bottom plate 82 against and covering the bottom outlet 93 and gently scooping bulk powder into the cell 90. Excess material should be scraped off level with the cell top outlet 92, and the upper plate 81 positioned to cover the top outlet 92. The weight Wt of material in the cell 90 is measured using an external scale accurate to 0.001 grams.

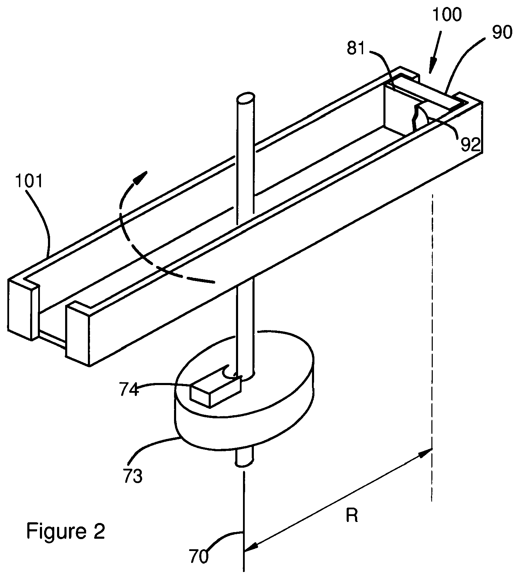

The material in the cell 90 is then consolidated by placing the cell assembly 100 (consisting of the cell 90 and covers 81, 82) into a rotation arm 101, as shown in Figure 2, to enable spinning the cell about an axis of rotation 70. For this purpose, the arm 101 may be connected to a conventional motor 73 capable of spinning at high speeds, typically 2,000 to 10,000 RPM (revolutions per minute). The cell is positioned at a distance R from the axis of rotation 70 with the top outlet 92 facing respectively inward and the cavity enter axis 95 perpendicular to the axis of rotation 70 (the top cover 81 is partially cut away in Figure 2 to display the top opening 92). The arm 101 is rotated slowly, then increasing speed to a prescribed speed (RPMcomp) and then maintained at that speed for a prescribed amount of time. The speed is measured preferably by a non-contact tachometer 74. The motor 73 and tachometer 74 are shown schematically, and the particular appropriate selection, mounting, and operation of these devices will be clear to one skilled in these devices.

The centrifugal (outward) forces caused by rotation of the bulk mass at high speed in a confined geometry cause the material to consolidate and develop stresses within the powder as discussed above. The consolidation stresses (Sigma) can be calculated by the following equation:

$$Sigma = 2 \times (2\pi \times RPM_{comp})^2 \times R \times Density \times H_t$$

Where Density is a mass density with appropriate units and the remaining parameters are as described above. This equation can be used to determine the prescribed RPMcomp for the purposes of testing for a stress state in a particular application of interest where strength data for the powder is useful. It will be obvious to one skilled in the art that useful prescribed parameters may vary with powder characteristics as well as environmental characteristics.

After consolidation, the top and bottom retaining plates 81, 82 are removed from the cell 90. With the plates 81, 82 removed, the material is free to flow from the outlet once acceleration force is again applied to the powder. If the material possesses strength as a consequence of consolidation induced stresses, the powder will arch over the conical outlet 93 and will not fall out when at rest.

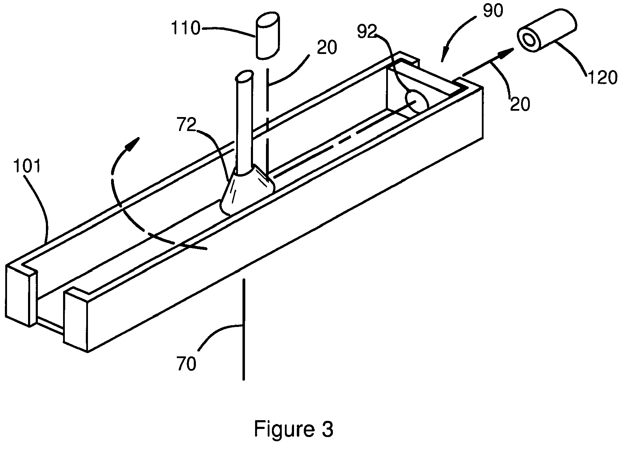

As shown in Figure 3, a light source 110 is configured to direct light 20 at the cavity 91. A photosensitive sensor 120 is located on the opposite side of the cell 90 and in line with the bottom opening 93 such as to receive the light 20 if passing through the cavity 91. After consolidation, the material in the cavity 91 blocks the light 20. Thus, light 20 impinging on the sensor 120 indicates that the cavity is no longer blocked by material. In the embodiment shown, the light is reflected for convenience from a conical surface 72 attached to the rotation arm 101 to align the light 20 with the cavity, while allowing the light source 110 to be distant.

During testing for strength, the light 20 is maintained. The cell 90 is then rotated at ever increasing speeds until the forces and stress levels generated by centrifugal acceleration overcome the strength of the bulk material and force material through the outlet 93. When this occurs, the light 20 passes through the outlet 93 to be detected by the photosensitive sensor 120, indicating failure of the cohesive arch in the test cell. The rotational speed at which the light first appears through the cell outlet 93 is recorded as the failure rotation speed (RPMfail). This value is used to compute the bulk strength of the material. The failure stresses can be computed to determine the bulk cohesive strength of the material sample.

The bulk unconfined yield strength (Strength) are calculated from the equation shown below.

$$Strength = \left(2\pi^2 Dt^2 R \times Density \times RPM_{fail}^2\right) / \left(Db \times \cos\phi\right)$$

Where $\Phi$ (phi) is the conventional internal angle of friction which can be taken as approximately 30 degrees for most materials and circumstances. If a more accurate value for angle of friction is known in any particular instance, it may be applied in the equation.

The particular design of the rotation arm 101 and structures supporting the cell 90, light source 110 and sensor 120 and the reflective elements directing the light 20 are not critical and various alternatives will become clear to those skilled in the art to satisfy the objectives defined herein. The essential parts to carry out the inventive methods within this particular embodiment are: a means of imposing a compaction stress on the bulk material using centrifugal forces, a means of removing confining plates from the cell, a means of imposing a controlled force to fail an arched material by using centrifugal forces, and a means of recognizing the onset of failure by passing a light signal through the cell. Alternative devices and methods for satisfying the inventive concepts are contemplated and will be obvious to those skilled in the art.

Various other configurations of light sources and sensors and light paths are contemplated and will be obvious to accomplish the same desired functions as the configuration shown. It should be noted that with the illustrated configuration, the sensor 120 may be independently mounted or fixed to the arm 101. If independent, the potential delay from the powder failure to light detection by the sensor 120 will not alter the results as there will be no significant change in speed in the interim.

Based on the embodiment shown, it will be obvious that the applied acceleration forces may be generated in other ways, although rotational movement is most convenient in most test settings. Likewise, alternative devices and methods of covering and exposing the cavity outlets may be used in substitution of the retaining plates 81, 82 while providing the same function.

All of these devices and steps may be controlled by a computer. This method could be automated, making it user friendly and technician resistant. The parts of this process that lend themselves to computer automation are control of the motors, rotational speed measurement, failure light trigger, environmental control, and calculation of the strength and consolidation pressure. This could be implemented using a laptop computer, simple data acquisition board, and a motor driver board that can accept a voltage input signal. The filling of the test cell and the removal of the retaining plates are best done manually. The footprint for this fully automated device could easily fit on a bench top.

For the most part, the elements in the patent are sequential in nature. Sample preparation should precede filling the cell, and consolidation must always precede testing the material to failure. However, there are some cases where preparing the sample could be skipped as part of the process. The mode of measuring the rotational speed generally includes a non-contact form of measurement. This could include reflectance methods directed toward the shaft, or monitoring proximity sensors placed near the rotating arm. In another embodiment, the detected light that signals failure is used as a trigger to observe and measure rotational speed.

The light source 110 can be any (monochromatic, laser, or multi-frequency) source with sufficient power to be observed either visually or with a photosensitive sensor capable of sensing 10,000 hertz signals. The method of directing the light source through the cell as described above uses a reflecting surface on of a portion of the test cell rotation arm. However, in other embodiments, the mode of directing the light through the cell may use any set of reflective surfaces which eventually direct the light source through the cell either forward or backward.

The inventive test methods could include conditioning the environment (temperature or relative humidity) to a prescribed temperature/humidity profile during the consolidation phase of the test, thereby allowing the tester to mimic actual process conditions.

**Claims**

1. A method of measuring bulk unconfined strength of powder material, comprising;

   confining a powder material in a conical cavity (91) having a top opening (92) and a smaller bottom opening (93);
   consolidating the powder against the covered bottom opening;
   uncovering the bottom opening; and **characterised by**:

   applying increasing acceleration forces to the powder in a direction toward the bottom opening until the powder is forced out of the cavity (91);
   detecting the event of powder leaving the cavity;
   determining the acceleration applied at the time the powder leaves the cavity;
   determining a powder strength from acceleration and the cavity geometry and powder physical characteristics.

2. A method, according to claim 1, and wherein:

   the step of detecting the event of powder leaving the cavity (91) comprises detecting light (20) passing through the cavity

3. A method, according to claim 1, and wherein:

   the step of applying increasing acceleration forces to the powder comprises rotating the cavity (90) containing powder about an axis of rotation (70) perpendicular to a cavity center axis (95).

4. A device for measuring bulk unconfined strength of powder material, comprising a conical cavity (91) having a center axis (95) and having a top opening (92) and a smaller bottom opening (93); **characterised by**:

   a retention means for removably covering the top and bottom openings (81, 82);
   an acceleration means (73) for rotating the cavity about an axis of rotation (70) perpendicular to the cavity center axis (95);
   a detection means (110, 120) for detecting when powder disposed in the cavity is then
   forced out of the cavity by the rotation of the cavity about the axis of rotation;
   a meter (74) for determining the rotational speed of the cavity when the powder is forced out of the cavity.

5. A device, according to claim 4, and wherein:

   the detection means comprises a light source (110) and a light sensor (120) together configured to detect light (20) passing through the cavity.

6. A device, according to claim 4, wherein the retention means comprises a top cover (81) and a bottom cover (82).

7. A device, according to claim 4, wherein the acceleration means comprises a rotation arm (101) configured to rotate about a vertical axis (70), the arm supporting the cavity (90).

**Patentansprüche**

1. Verfahren zur Messung von nicht eingeengter Schüttgutfestigkeit von Pulvermaterial, das Folgendes umfasst:

Einengen eines Pulvermaterials in einem konischen Hohlraum (91), der eine obere Öffnung (92) und eine kleinere untere Öffnung (93) aufweist;
Verdichten des Pulvers gegen die bedeckte untere Öffnung;
Abdecken der unteren Öffnung; und **gekennzeichnet ist durch**:

Anwenden von zunehmenden Beschleunigungskräften auf das Pulver in einer Richtung zu der unteren Öffnung bis das Pulver aus dem Hohlraum (91) rausgedrängt wird;
Detektieren des Ereignisses, wenn das Pulver den Hohlraum verlässt;
Bestimmen der angewendeten Beschleunigung zu dem Zeitpunkt, wenn das Pulver den Hohlraum verlässt;
Bestimmen einer Pulverfestigkeit aus der Beschleunigung und der Hohlraumgeometrie und den physikalischen Eigenschaften des Pulvers.

2. Verfahren nach Anspruch 1 und wobei:

der Schritt des Detektierens des Ereignisses, wenn das Pulver den Hohlraum (91) verlässt, das Detektieren von Licht (20), das durch den Hohlraum geht, umfasst.

3. Verfahren nach Anspruch 1 und wobei:

der Schritt des Anwendens von zunehmenden Beschleunigungskräften auf das Pulver das Rotieren des Hohlraums (90), der Pulver enthält, um eine Rotationsachse (70) senkrecht zu einer Hohlraummittelachse (95) umfasst.

4. Vorrichtung zur Messung von nicht eingeengter Schüttgutfestigkeit von Pulvermaterial, die Folgendes umfasst:
einen konischen Hohlraum (91), der eine Mittelachse (95) aufweist und eine obere Öffnung (92) und eine kleinere untere Öffnung (93) aufweist; **gekennzeichnet durch**:

ein Rückhaltemittel zur entfernbaren Abdeckung der oberen und unteren Öffnung (81, 82);
ein Beschleunigungsmittel (73) zur Rotation des Hohlraums um eine Rotationsachse (70) senkrecht zu der Hohlraummittelachse (95);
ein Detektionsmittel (110, 120) zur Detektion, wenn Pulver, das in dem Hohlraum angeordnet ist, dann aus dem Hohlraum **durch** die Rotation des Hohlraums um die Rotationsachse gedrängt wird;
ein Messinstrument (74) zur Bestimmung der Rotationsgeschwindigkeit des Hohlraums, wenn das Pulver aus dem Hohlraum gedrängt wird.

5. Vorrichtung nach Anspruch 4 und wobei:

das Detektionsmittel eine Lichtquelle (110) und einen Lichtsensor (120) umfasst, die zusammen konfiguriert sind, um Licht (20), das durch den Hohlraum geht, zu detektieren.

6. Vorrichtung nach Anspruch 4, wobei das Rückhaltemittel eine obere Abdeckung (81) und eine untere Abdeckung (82) umfasst.

7. Vorrichtung nach Anspruch 4, wobei das Beschleunigungsmittel einen Rotationsarm (101) umfasst, der zur Rotation um eine vertikale Achse (70) konfiguriert ist, wobei der Arm den Hohlraum (90) trägt.

**Revendications**

1. Procédé de mesure de la résistance d'une matière en poudre libre en vrac, comprenant :

l'enfermement d'une matière en poudre dans une cavité conique (91) ayant une ouverture supérieure (92) et une ouverture inférieure plus petite (93) ;
la consolidation de la poudre contre l'ouverture inférieure couverte ;
le découvrement de l'ouverture inférieure ; et **caractérisé par**
l'application de forces d'accélération croissantes sur la poudre dans une direction vers l'ouverture inférieure jusqu'à ce que la poudre soit poussée hors de la cavité (91) ;
la détection du fait que la poudre quitte la cavité ;

la détermination de l'accélération appliquée au moment où la poudre quitte la cavité ;
la détermination d'une résistance de la poudre à partir de l'accélération et de la géométrie de la cavité et des caractéristiques physiques de la poudre.

2. Procédé selon la revendication 1, et dans lequel :

l'étape de détection du fait que la poudre quitte la cavité (91) comprend la détection d'une lumière (20) passant à travers la cavité.

3. Procédé selon la revendication 1, et dans lequel :

l'étape d'application de forces d'accélération croissantes sur la poudre comprend la rotation de la cavité (90) contenant la poudre autour d'un axe de rotation (70) perpendiculaire à un axe central de la cavité (95).

4. Dispositif pour mesurer la résistance d'une matière en poudre libre en vrac, comprenant une cavité conique (91) ayant un axe central (95) ayant une ouverture supérieure (92) et une ouverture inférieure plus petite (93) ; **caractérisé par**:

un moyen de rétention pour couvrir de manière amovible les ouvertures supérieure et inférieure (81, 82)
un moyen d'accélération (73) pour tourner la cavité autour d'un axe de rotation (70) perpendiculaire à l'axe central de la cavité (95) ;
un moyen de détection (110, 120) pour détecter quand la poudre disposée dans la cavité est alors poussée hors de la cavité par la rotation de la cavité autour de l'axe de rotation ;
un appareil de mesure (74) pour déterminer la vitesse de rotation de la cavité lorsque la poudre est poussée hors de la cavité.

5. Dispositif selon la revendication 4, et dans lequel :

le moyen de détection comporte une source lumineuse (110) et un capteur de lumière (120) configurés ensemble de façon à détecter la lumière (20) passant à travers la cavité.

6. Dispositif selon la revendication 4, dans lequel le moyen de rétention comprend un couvercle supérieur (81) et un couvercle inférieur (82),

7. Dispositif selon la revendication 4, dans lequel le moyen d'accélération comprend un bras de rotation (101) configuré de façon à tourner autour d'un axe vertical (70), ce bras supportant la cavité (90).

Figure 1b

Figure 1a

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5117699 A